# EUROPÄISCHE PATENTSCHRIFT

(11) **EP 4 729 389 B1**
(45) Veröffentlichungstag und Bekanntmachung des Hinweises auf die Patenterteilung: **23.09.2026**
(21) Anmeldenummer: 25208038.7
(22) Anmeldetag: 10.10.2025
(51) Int. Cl.: B62D 1/181

(54) **VERFAHREN ZUR POSITIONSVERSTELLUNG EINER IN ZWEI RICHTUNGEN VERSTELLBAREN LENKSÄULE FÜR EIN LENKSYSTEM EINES KRAFTFAHRZEUGS, KRAFTFAHRZEUG-LENKSÄULE UND KRAFTFAHRZEUG**
METHOD FOR ADJUSTING THE POSITION OF A STEERING COLUMN ADJUSTABLE IN TWO DIRECTIONS FOR A STEERING SYSTEM OF A MOTOR VEHICLE, MOTOR VEHICLE STEERING COLUMN AND MOTOR VEHICLE
PROCÉDÉ DE RÉGLAGE EN POSITION D'UNE COLONNE DE DIRECTION À DEUX DIRECTIONS POUR UN SYSTÈME DE DIRECTION D'UN VÉHICULE AUTOMOBILE, COLONNE DE DIRECTION DE VÉHICULE AUTOMOBILE ET VÉHICULE AUTOMOBILE

(30) Priorität: 15.10.2024 BE 202405692
(43) Veröffentlichungstag der Anmeldung: 22.04.2026
(73) Patentinhaber: thyssenkrupp Presta AG, 9492 Eschen (LI); thyssenkrupp AG, 45143 Essen (DE)
(72) Erfinder: Sikur, Zoltán, 3360 Heves (HU); Gliga, Peter, 9465 Salez (CH); Szepessy, Imre, 9493 Mauren (LI)
(74) Vertreter: thyssenkrupp Intellectual Property GmbH

(56) Entgegenhaltungen:
- WO-A1-2020/099362
- JP-A- 2012 170 276

## Beschreibung

Die zu Grunde liegende Erfindung betrifft ein Verfahren zur Positionsverstellung einer in zwei Richtungen verstellbaren Lenksäule für ein Lenksystem eines Kraftfahrzeugs, eine Kraftfahrzeug-Lenksäule und ein Kraftfahrzeug.

In zwei Richtungen, beispielsweise in X-Richtung (Längsverstellung) und Z-Richtung (Höhenverstellung) verstellbare Lenksäulen dienen zur Anpassung der Position des Lenkrades an die Sitzposition des Fahrers in einem Fahrzeug und sind in unterschiedlichen Ausführungsformen bekannt. In vielen Kraftfahrzeugen kann die vertikale Neigung der Lenksäule (Höhenverstellung) und der Abstand des Lenkrades zum Fahrer (Längsverstellung) eingestellt werden. Dabei ist es bekannt, die Positionsverstellung der Lenksäule, und damit des Lenkrads, mittels Verstellaktuatoren oder Antriebsaktuatoren, die über entsprechende Verstellmechanismen, umfassend z.B. geeignete Getriebeeinheiten, vorzunehmen. Als Verstellaktuatoren werden herkömmlicherweise Gleichstromaktuatoren (DC-Aktuatoren), insbesondere Gleichstrommotoren, verwendet.

Bei einer aus der EP 1 927 526 A1 bekannten Lösung für eine durch zwei Verstellaktuatoren verstellbare Lenksäule wird jeder Verstellaktuator durch eine separate Steuerungselektronik oder Aktuatortreiberschaltung angesteuert, wobei jede Aktuatortreiberschaltung mehrere parallelgeschaltete Halbbrücken mit Schaltelementen der Leistungselektronik, insbesondere Feldeffekttransistoren (FET), aufweist. Die beiden Aktuatortreiberschaltungen werden durch eine zentrale Prozessoreinheit angesteuert, die auf entsprechende Ansteuerbefehle vom Fahrer oder Bediener anspricht. Solche doppelten Aktuatortreiberschaltungen sind aufwändig und kostenintensiv.

Aus der WO 2020/099362 A1 ist eine durch einen ersten und zweiten Antriebsaktuator in X-Richtung und Z-Richtung verstellbare Lenksäule bekannt. Für die beiden Antriebsaktuatoren ist eine einzige Aktuatortreiberschaltung vorgesehen. Die Aktuatortreiberschaltung umfasst drei parallelgeschaltete Halbbrücken mit Schaltelementen der Leistungselektronik. An einem zwischen den Schaltelementen einer ersten Halbbrücke gelegenen ersten Knotenpunkt ist ein erster Anschluss des ersten Antriebsaktuators angeschlossen bzw. mit diesem verbunden. An einem zwischen den Schaltelementen einer zweiten Halbbrücke gelegenen zweiten Knotenpunkt ist ein zweiter Anschluss des zweiten Antriebsaktuators angeschlossen bzw. mit diesem verbunden. An einem zwischen den Schaltelementen einer dritten Halbbrücke gelegenen dritten Knotenpunkt sind sowohl ein zweiter Anschluss des ersten Antriebsaktuators als auch ein erster Anschluss des zweiten Antriebsaktuators angeschlossen. Zur Positionsverstellung der Lenksäule durch die Antriebsaktuatoren, insbesondere zur Steuerung der Drehrichtung und Geschwindigkeit der Antriebsaktuatoren schlägt die WO 2020/099362 A1 einen Betrieb der Aktuatortreiberschaltung vor, bei dem jeweils genau ein Schaltelement der dritten Halbbrücke durchgeschalten ist und bei durchgeschaltetem Schaltelement der dritten Halbbrücke die beiden anderen Halbbrücken separat oder gemeinsam, beispielsweise durch Pulsweitenmodulation, angesteuert werden. Der aus der WO 2020/099362 A1 bekannte Betrieb der Aktuatortreiberschaltung ist allerdings hinsichtlich der Einstellung der Drehrichtung und Geschwindigkeit der Antriebsaktuatoren verbesserungsbedürftig.

Ausgehend davon soll ein verbessertes Verfahren zur Positionsverstellung einer in zwei Richtungen verstellbaren Lenksäule für ein Lenksystem eines Kraftfahrzeugs mittels eines ersten und eines zweiten Antriebsaktuators bereitgestellt werden. Ferner sollen eine entsprechende Kraftfahrzeug-Lenksäule und ein Kraftfahrzeug bereitgestellt werden.

Diese Aufgabe wird gelöst durch die unabhängigen Ansprüche. Vorteilhafte Ausgestaltungen und Weiterbildungen ergeben sich aus den abhängigen Ansprüchen und der nachfolgenden Beschreibung.

Nach einer Ausgestaltung ist ein Verfahren zur Positionsverstellung einer in zwei Richtungen verstellbaren Lenksäule für ein Lenksystem eines Kraftfahrzeugs mittels eines ersten und eines zweiten Antriebsaktuators durch eine Steuereinheit, insbesondere eine Steuerschaltung oder Aktuatortreiberschaltung, vorgesehen. Bei den beiden Richtungen kann es sich um eine X-Richtung zur Längsverstellung der Lenksäule und eine Z-Richtung zur Höhenverstellung und/oder Neigungsverstellung der Lenksäule und damit einhergehend des Lenkrads handeln. Die Antriebsaktuatoren, oder auch Verstellaktuatoren, können mit jeweils in Wirkverbindung stehenden Verstellmechanismen gekoppelt sein, die z.B. zusammen mit den Aktuatoren an einer Trageinheit der Lenksäule montiert sein können. Insbesondere sind die Antriebsaktuatoren als Elektromotoren ausgebildet.

Die Steuereinheit weist eine erste, eine zweite und eine dritte Halbbrücke auf. Jede Halbbrücke umfasst zwei in Reihe geschaltete Schaltelemente, insbesondere Schaltelemente der Leistungselektronik, wie Halbleiterschalter, insbesondere Schalttransistoren und MOSFETs (Metall-Oxid-Feld-Effekt-Transistor). Die Halbbrücken sind im Rahmen der Durchführung des Verfahrens, und im Übrigen bei bestimmungsgemäßem Betrieb der Steuereinheit zur Positionsverstellung der Lenksäule, zwischen einem ersten und einem zweiten elektrischen Gleichstrompotential parallel geschaltet. Das zweite elektrische Gleichstrompotential ist niedriger als das erste elektrische Gleichstrompotential.

Dem ersten elektrischen Gleichstrompotential kann, wie bei Kraftfahrzeuganwendungen bekannt, der Pluspol (+) einer Gleichstromspannungsquelle des Kraftfahrzeugs zugeordnet sein. Dem zweiten elektrischen Gleichstrompotential kann, wie bei Kraftfahrzeuganwendungen bekannt, der Minuspol (-) einer Gleichstromspannungsquelle des Kraftfahrzeugs, üblicherweise auch bezeichnet als Masse (oder engl. Ground GND) zugeordnet sein.

Das erste elektrische Gleichstrompotential wird im Zusammenhang mit Halbbrücken aus in Reihe geschalteten Schaltelementen auch als "Highside" oder "Highside-Potential" und das zweite elektrische Gleichstrompotential als "Lowside" oder "Lowside-Potential" bezeichnet. Entsprechend wird ein mit der Highside verbundenes Schaltelement einer Halbbrücke mit "Highside-Schalter" oder "Highside-Schaltelement" und ein mit der Lowside verbundenes Schaltelement der Halbbrücke mit "Highside-Schalter" oder "Highside-Schaltelement" bezeichnet.

Zwischen den beiden Schaltelementen der ersten Halbbrücke ist ein erster Anschluss, hier als erster Knotenpunkt bezeichnet, ausgebildet. Analog sind zwischen den beiden Schaltelementen der zweiten und der dritten Halbbrücke respektive ein zweiter und dritter Knotenpunkt gebildet. Die Knotenpunkte bilden Anschlüsse zum Anschluss von elektrischen Anschlüssen oder Versorgungsleitungen der Antriebsaktuatoren zu deren Versorgung mit elektrischer Energie zum Betrieb der Antriebsaktuatoren.

Die elektrische Verbindung der Knotenpunkte mit den elektrischen Anschlüssen der Antriebsaktuatoren wird nachfolgend genauer beschrieben.

Jeder Antriebsaktuator weist einen ersten elektrischen Anschluss und einen zweiten elektrischen Anschluss auf. Gemäß der vorgeschlagenen Steuereinheit ist der erste Anschluss des ersten Antriebsaktuators mit dem ersten Knotenpunkt der ersten Halbbrücke elektrisch leitend verbunden. Der zweite Anschluss des zweiten Antriebsaktuators ist mit dem zweiten Knotenpunkt der zweiten Halbbrücke elektrisch leitend verbunden. Ferner sind der zweite Anschluss des ersten Antriebsaktuators und der erste Anschluss des zweiten Antriebsaktuators jeweils mit dem dritten Knotenpunkt der dritten Halbbrücke elektrisch leitend verbunden. Anders ausgedrückt ist der erste Anschluss des ersten Antriebsaktuators an den ersten Knotenpunkt, der einen zwischen den beiden Schaltelementen der ersten Halbbrücke gelegenen Anschluss definiert, elektrisch leitend angeschlossen, und der zweite Anschluss des ersten Antriebsaktuators ist an den dritten Knotenpunkt, der einen zwischen den beiden Schaltelementen der dritten Halbbrücke gelegenen Anschluss definiert, elektrisch leitend angeschlossen. Ferner ist der erste Anschluss des zweiten Antriebsaktuators an den dritten Knotenpunkt, der einen zwischen den beiden Schaltelementen der dritten Halbbrücke gelegenen Anschluss definiert, elektrisch leitend angeschlossen, und der zweite Anschluss des zweiten Antriebsaktuators ist an den zweiten Knotenpunkt, der einen zwischen den beiden Schaltelementen der zweiten Halbbrücke gelegenen Anschluss definiert, elektrisch leitend angeschlossen. Mithin können die drei parallel geschalteten Halbbrücken als zwei "parallele" Vierquadrantensteller angesehen werden, welche die dritte Halbbrücke als eine gemeinsame Halbbrücke aufweisen.

Verfahrensgemäß ist ein Betriebsmodus, nämlich ein zusammenhängender Betriebszyklus, der Steuereinheit vorgesehen, in welchem der erste und zweite Antriebsaktuator mittels der ersten bis dritten Halbbrücke gemeinsam, d.h. gleichzeitig angesteuert werden. Dabei sieht das Verfahren vor, dass in dem Betriebsmodus die Schaltelemente sowohl der ersten und zweiten als auch der dritten Halbbrücke jeweils durch Pulsweitenmodulationssignale (PWM-Signale) mit jeweils zugeordneter Periodendauer und zugeordnetem Tastgrad angesteuert und in einem, insbesondere kontinuierlich, taktenden Betrieb betrieben werden. Insbesondere werden die erste Halbbrücke durch erste, die zweite Halbbrücke durch zweite und die dritte Halbbrücke durch dritte PWM-Signale angesteuert, bzw. die drei Halbbrücken werden gleichzeitig im PWM-Modus betrieben. Insbesondere werden in dem vorgeschlagenen Betriebsmodus alle drei Halbbrücken gleichzeitig, vorteilhafterweise über eine gewisse Zeitspanne hinweg, die mehrere Periodendauern, insbesondere mehrere Periodendauern der ersten und/oder zweiten PWM-Signale umfassen, gemäß einer PWM, insbesondere kontinuierlich, getaktet betrieben. Damit unterscheidet sich das vorgeschlagene Verfahren insbesondere von dem der eingangs genannten WO 2020/099362 A1, bei welchem die dritte Halbbrücke eben gerade nicht getaktet betrieben wird, sondern eines der beiden Schaltelemente der dritten Halbbrücke in einem zusammenhängenden Betriebszyklus kontinuierlich durchgeschalten wird.

Als ein Betriebsmodus oder zusammenhängender Betriebszyklus soll insbesondere ein Betrieb der Antriebsaktuatoren oder Verstellaktuatoren verstanden werden, welcher in Reaktion auf ein einzelnes Aktivierungssignal durch einen Benutzer oder Fahrer erfolgt, und in welchem Periodendauern und Tastgrade der PWM-Signale unverändert bleiben.

Ein Vorteil des vorgeschlagenen Verfahrens besteht insbesondere in erweiterten Betriebsmöglichkeiten für die Antriebsaktuatoren, die unter Verwendung des vorgeschlagenen getakteten Betriebs durch geeignete PWM-Signale variabel mit gleicher oder unterschiedlicher Drehrichtung und mit gleichen oder unterschiedlichen Geschwindigkeiten (oder Drehmomenten) betrieben werden können, insbesondere ohne dass - verglichen mit der Lösung nach WO 2020/099362 A1- hardwareseitige Veränderungen erforderlich wären.

Insbesondere kann mit der vorgeschlagenen Lösung bei einfachem und kompaktem Aufbau der Steuereinheit eine verbesserte Positionsverstellung für die Lenksäule erreicht werden. Drehrichtung und Aktuatorstrom ergeben sich insbesondere aus den Differenzen der Tastgrade zwischen den ersten bzw. zweiten PWM-Signalen einerseits und dem Tastgrad des dritten PWM-Signals, vorteilhafterweise aus den Differenzen der Pulsweitenmodulation der ersten und zweiten Halbbrücke gegenüber der dritten Halbbrücke, sodass eine Einstellung einer z.B. von einem Benutzer oder Fahrer gewünschten Drehrichtung und/oder Geschwindigkeit der Positionsverstellung (in X-Richtung und/oder Z-Richtung) in einfacher Weise umsetzbar ist.

Gemäß vorteilhaften weiteren Ausgestaltungen sind die Periodendauern der Pulsweitenmodulationssignale gleich, wobei die Tastgrade der Pulsweitenmodulationssignale jeweils zwischen 0 und 100% liegen. Insbesondere durch die Verwendung identischer bzw. gleicher Periodendauern kann eine durch einen Benutzer oder Fahrer, z.B. an einer Benutzerschnittstelle in einem Kraftfahrzeug, getätigte Verstelleingabe vergleichsweise einfach in PWM-Signale umgesetzt werden.

Gemäß Ausgestaltungen beträgt der Tastgrad für den taktenden Betrieb der dritten Halbbrücke 50%. Dadurch können Verstelleingaben besonders einfach umgesetzt werden.

Gemäß Ausgestaltungen sind die Tastgrade der Pulsweitenmodulationssignale zum taktenden Betrieb der ersten und zweiten Halbbrücke verschieden vom Tastgrad des Pulsweitenmodulationssignals zum taktenden Betrieb der dritten Halbbrücke. Entsprechende Differenzen im Tastgrad zwischen den ersten und zweiten PWM-Signalen einerseits und dem Tastgrad des dritten PWM-Signals ermöglichen die Einstellung jeweils gewünschter, d.h. vom Benutzer oder Fahrer kommandierter, Drehrichtungen und/oder Geschwindigkeiten für die Antriebsaktuatoren.

Insbesondere kann gemäß weiteren vorteilhaften Ausgestaltungen vorgesehen sein, dass eine Drehrichtung der Antriebsaktuatoren und/oder ein durch die Antriebsaktuatoren fließender Strom für den Betriebsmodus durch die Tastgrade der Pulsweitenmodulationssignale zum taktenden Betrieb der ersten und zweiten Halbbrücke eingestellt wird/werden. Insbesondere kann die Drehrichtung und/oder der Strom (Drehgeschwindigkeit bzw. Drehmoment) durch eine jeweilige Differenz der Tastgrade der Pulsweitenmodulationssignale zum taktenden Betrieb der ersten bzw. zweiten Halbbrücke einerseits und des Tastgrads des Pulsweitenmodulationssignals der dritten Halbbrücke andererseits eingestellt werden. Die Einstellung der Tastgrade kann, wie erwähnt, in Reaktion auf eine Benutzereingabe erfolgen, mit welchem der Benutzer - üblicherweise ein Fahrer des Kraftfahrzeugs - über eine Benutzerschnittstelle eine Positionsverstellung, z.B. ein Ausfahren/Einfahren und/oder ein Hoch- oder Niederstellen, der Lenksäule kommandiert.

Gemäß weiteren vorteilhaften Ausgestaltungen können die beiden Schaltelemente einer jeden Halbbrücke jeweils mit komplementären Tastgraden getaktet werden. Beispielsweise können in einem lediglich beispielhaften Betriebsmodus das erste Schaltelement der ersten Halbbrücke mit einem Tastgrad von 75% und das zweite Schaltelement der ersten Halbbrücke mit einem Tastgrad von 25%, das erste Schaltelement der zweiten Halbbrücke mit einem Tastgrad von 25% und das zweite Schaltelement der zweite Halbbrücke mit einem Tastgrad von 75%, und das erste Schaltelement der dritten Halbbrücke mit einem Tastgrad von 50% und das zweite Schaltelement der dritten Halbbrücke mit einem Tastgrad von 50% betrieben werden. In dem genannten Beispiel können die beiden Antriebsaktuatoren beispielsweise mit gleicher Drehrichtung und gleichem Strom (25%) betrieben werden.

Gemäß weiteren vorteilhaften Ausgestaltungen können als Schaltelemente Halbleiterschaltelemente, insbesondere Schalttransistoren, vorzugsweise MOSFETs, der Leistungselektronik verwendet werden.

Gemäß weiteren vorteilhaften Ausgestaltungen können als Antriebsaktuatoren bürstenbehaftete Gleichstromaktuatoren verwendet werden.

Gemäß weiteren vorteilhaften Ausgestaltungen kann das Verfahren einen weiteren Betriebsmodus umfassen, in welchem lediglich die Schaltelemente der ersten und zweiten Halbbrücke durch Pulsweitenmodulationssignale mit jeweils zugeordneter Periodendauer und zugeordnetem Tastgrad angesteuert und in einem taktenden Betrieb betrieben werden. Das bedeutet, dass die dritte Halbbrücke nicht durch PWM-Signale angesteuert wird. Insbesondere werden in diesem zweiten Betriebsmodus lediglich die ersten und zweiten Halbbrücken durch PWM betrieben, während bei der dritten Halbbrücke stets lediglich ein Schaltelement durchgeschaltet ist.

Gemäß weiteren vorteilhaften Ausgestaltungen ist eine Kraftfahrzeug-Lenksäule für ein Lenksystem eines Kraftfahrzeugs mit einer Steuereinheit und einer

Positionsverstelleinrichtung zur Positionsverstellung der Kraftfahrzeug-Lenksäule vorgesehen. Wie oben beschrieben weist die Positionsverstelleinrichtung zwei Antriebsaktuatoren auf, und die Steuereinheit weist eine erste, zweite und dritte Halbbrücke mit jeweils zwei in Reihe geschalteten Schaltelementen auf. Die Halbbrücken sind im Betrieb, d.h. in einer ordnungs- und bestimmungsgemäß umgesetzten betriebsfertigen Implementierung, zwischen einem ersten ("+". "Highside") und einem zweiten ("-", Masse oder GND) elektrischen Gleichstrompotential, das niedriger ist als das erste elektrische Gleichstrompotential, parallel geschaltet. Zwischen den beiden Schaltelementen der ersten, der zweiten und der dritten Halbbrücke ist, respektive, ein erster, zweiter und dritter Knotenpunkt (Anschluss) gebildet. Jeder Antriebsaktuator weist einen ersten und zweiten elektrischen Anschluss auf, wobei, analog zu oben, der erste Anschluss des ersten Antriebsaktuators mit dem ersten Knotenpunkt, der zweite Anschluss des zweiten Antriebsaktuators mit dem zweiten Knotenpunkt, und der zweite Anschluss des ersten Antriebsaktuators und der erste Anschluss des zweiten Aktuators jeweils mit dem dritten Knotenpunkt der dritten Halbbrücke verbunden sind. Der Steuereinheit ist ein Steuerungselement, insbesondere eine (digitale) Steuerungselektronik, vorzugsweise eine digitale Logik, einen Prozessor, Mikrocontroller und/oder Mikrocomputer. Das Steuerungselement ist, insbesondere durch Programmierung oder durch in einem der Steuereinheit oder dem Steuerelement zugeordneten Speicher gespeicherte und durch das Steuerungselement ausführbare Computerprogramm-Anweisungen, dazu eingerichtet, ein Verfahren nach einem der hierin erfindungsgemäß vorgeschlagenen Ausgestaltungen auszuführen.

Gemäß weiteren vorteilhaften Ausgestaltungen ist ein Kraftfahrzeug mit einem Lenksystem vorgesehen, das eine Kraftfahrzeug-Lenksäule gemäß der vorangehenden Ausgestaltung aufweist.

Bezüglich vorteilhafter Wirkungen der Kraftfahrzeug (KFZ)-Lenksäule und des Kraftfahrzeugs wird auf die verfahrensgemäßen Ausgestaltungen verwiesen.

Nachfolgend werden Ausführungsbeispiele zur Erfindung anhand der anhängenden Figuren näher beschrieben. Es zeigen:
- Fig. 1: beispielhaft eine erste perspektivische Darstellung einer KFZ-Lenksäule;
- Fig. 2: beispielhaft eine zweite perspektivische Darstellung einer KFZ-Lenksäule;
- Fig. 3: eine Übersichtsdarstellung einer Steuerung zur Ansteuerung zweier Antriebsaktuatoren der KFZ-Lenksäule;
- Fig. 4: eine Verschaltung einer Steuereinheit mit den Antriebsaktuatoren zur Durchführung eines hierin vorgeschlagenen Verfahrens; und
- Fig. 5: schematisch einen zeitverlauf von PWM-Signalen.

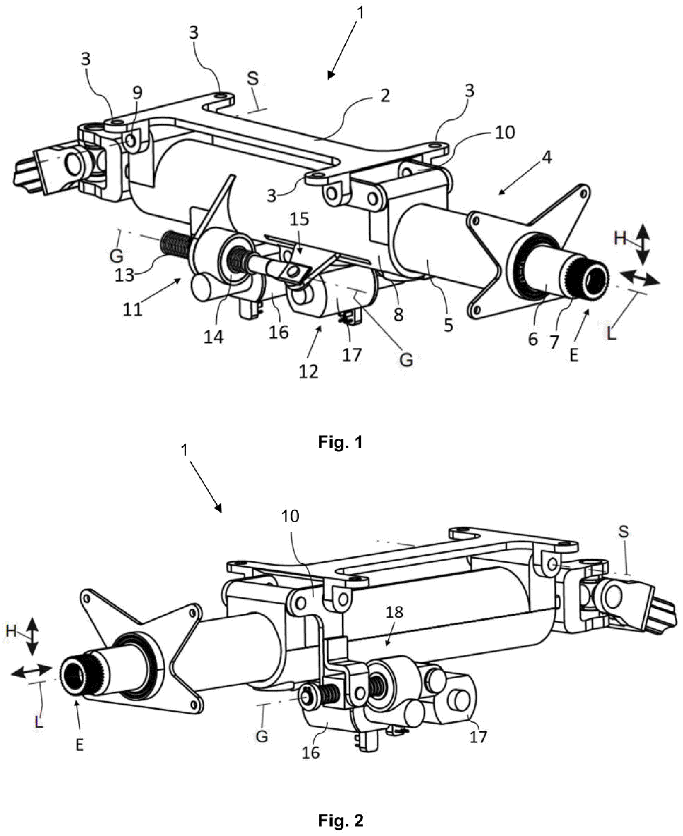

Fig. 1 zeigt, zur Verdeutlichung der Erfindung, eine KFZ-Lenksäule 1 in einer schematischen perspektivischen Ansicht von oben rechts schräg auf ein hinteres Ende E, bezogen auf die Fahrtrichtung eines nicht dargestellten Kraftfahrzeugs. An den hinteren Ende E ist im bestimmungsgemäßen Gebrauch ein (nicht dargestelltes) Lenkrad montiert. Fig. 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 3, z.B. in Form von Befestigungsbohrungen, aufweist, zur Befestigung an einer Struktur eines (nicht dargestellten) Kraftfahrzeugs (KFZ). Von der Trageinheit 2 wird eine Stelleinheit 4 zur Positionsverstellung der Lenksäule 1 gehalten.

Die Stelleinheit 4 weist ein Mantelrohr 5 auf, in dem eine Lenkspindel 6 um eine Längsachse L drehbar gelagert ist, und die sich axial in Längsrichtung, d.h. in Richtung der Längsachse L, erstreckt. Am hinteren Ende E ist an der Lenkspindel 6 ein Befestigungsabschnitt 7 zur Montage eines (nicht dargestellten) Lenkrads vorgesehen.

Das Mantelrohr 5 ist zur Umsetzung einer Verstellbarkeit in Längsrichtung L in einer Manteleinheit 8 in Richtung der Längsachse L teleskopartig verschiebbar aufgenommen, so dass das mit der Lenkspindel 6 verbundene (nicht dargestellte) Lenkrad über einen ersten Verstellantrieb 11 relativ zur Trageinheit 2 in Längsrichtung L (X-Richtung) vor und zurück verstellbar ist, wie mit dem Doppelpfeil parallel zur Längsachse L angedeutet.

Die Manteleinheit 8 ist um eine quer zur Längsachse L liegende, (im eingebauten Zustand horizontale) Schwenkachse S verschwenkbar in einem Schwenklager 9 an der Trageinheit 2 gelagert. Im hinteren Bereich ist die Manteleinheit 8 über einen Stellhebel 10 mit der Trageinheit 2 verbunden.

Durch eine Drehbewegung des Stellhebels 10 mittels eines zweiten Verstellantriebs 12 kann die Manteleinheit 8 relativ zur Trageinheit 2 um die im Einbauzustand waagerecht liegende Schwenkachse S verschwenkt werden, wodurch eine Verstellung eines an dem Befestigungsabschnitt 7 angebrachten Lenkrads in Höhenrichtung H (Z-Richtung) vorgenommen werden kann, was mit dem Doppelpfeil zu H angedeutet ist.

Der erste Verstellantrieb 11 zur Längsverstellung der Verstelleinheit 4 relativ zur Manteleinheit 8 in Richtung der Längsachse L weist beispielhaft und nicht beschränkend einen Spindeltrieb mit einer Gewindespindel 13 und einer damit im Eingriff befindlichen Spindelmutter 14 auf, wobei eine Gewindespindelachse G der Gewindespindel 13 im Wesentlichen parallel zur Längsachse L verläuft.

Die Spindelmutter 14 ist um die Gewindespindelachse G drehbar in einem Lagergehäuse gelagert, welches fest mit der Manteleinheit 8 verbunden ist. In Richtung der Gewindespindelachse G ist die Spindelmutter 13 axial über das Lagergehäuse an der Manteleinheit 8 abgestützt. Der erste Verstellantrieb 11 bildet einen sog. Tauchspindelantrieb.

Die Gewindespindel 13 ist mit einem an ihrem Ende ausgebildete Übertragungseinheit 15 mit dem verschiebbaren Mantelrohr 5 verbunden, so dass das Mantelrohr 5 durch Drehung der Spindelmutter 14 durch einen damit wirkverbundenen ersten Antriebsaktuator 16, insbesondere einen Permanentmagnet-Synchronmotor, und eine damit einhergehende Bewegung der Gewindespindel 13 in Längsrichtung verschiebbar bzw. verstellbar ist.

Der zweite Verstellantrieb 12 zur Verstellung des Stellhebels 10 und entsprechend der Lenksäule in Höhenrichtung H weist einen zweiten Antriebsaktuator 17, insbesondere einen Permanentmagnet-Synchronmotor, auf, welcher über einen Rotationsspindelmechanismus 18 (siehe Fig. 2) wirkverbunden ist mit dem Stellhebel 10. Bei Aktivierung des Rotationsspindelmechanismus 18 durch den zweiten Antriebsaktuator 17 kann durch die Hebelwirkung des Stellhebels 10 die Manteleinheit 8 relativ zu der Trageinheit 2 in Höhenrichtung H auf- oder abbewegt werden, wie durch einen Doppelpfeil zu H angedeutet.

Mithin ist mit den beiden, lediglich beispielhaft gezeigten, Verstellantrieben 11 und 12 durch entsprechende Ansteuerung der Antriebsaktuatoren 16 und 17 eine Positionsverstellung der KFZ-Lenksäule 1 möglich, insbesondere indem die Antriebsaktuatoren 16 und 17 hinsichtlich Drehrichtung und/oder Drehgeschwindigkeit geeignet angesteuert werden.

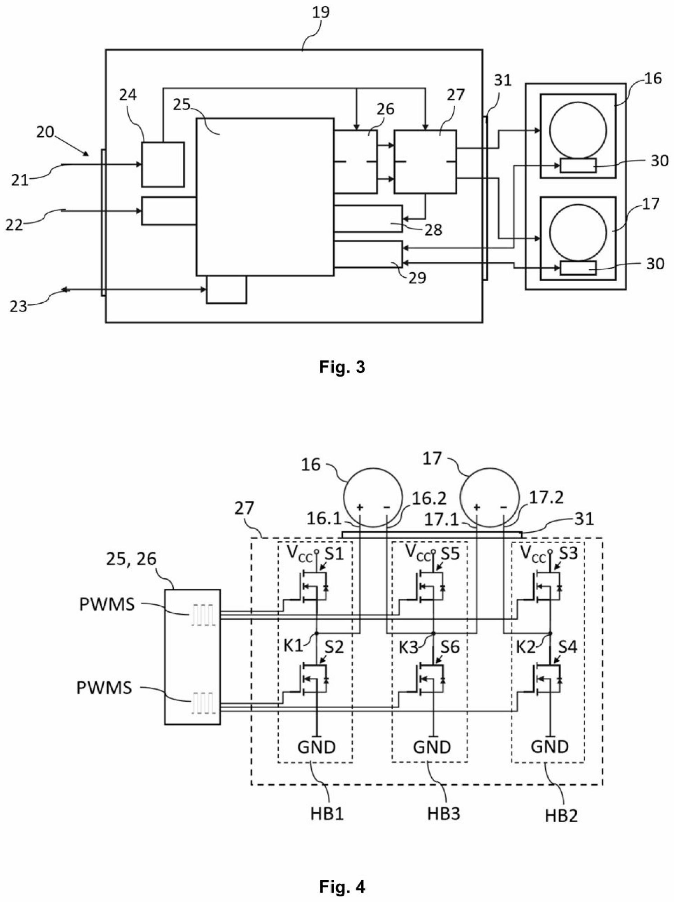

Fig. 3 zeigt eine Übersichtsdarstellung einer beispielhaften und nicht beschränkenden Ausgestaltung einer Steuerung 19 (oder: eines Steuergeräts) zur Positionsverstellung der KFZ-Lenksäule 1. Die Steuerung 19 weist eine erste Schnittstelleneinheit 20 zur Anbindung an die elektrische und elektronische Infrastruktur des KFZ auf, beispielsweise und nicht beschränkend mit einer ersten Schnittstelle 21 zur Energie- bzw. Spannungsversorgung, einer zweiten Schnittstelle 22 zur Verbindung mit einer benutzerseitig betätigbaren Stellvorrichtung zur Positionseinstellung der KFZ-Lenksäule 1 und zur Übermittlung entsprechender Stellsignale, sowie mit einer dritten Schnittstelle 23 zur Anbindung der Steuerung 19 an ein KFZ-internes Netzwerk.

Der ersten Schnittstelle 21 nachgeschaltet kann, wie in Fig. 3 dargestellt, ein elektromagnetischer Interferenzfilter (EMI-Filter) 24 angeordnet sein, über welchen ein als Steuerungselement vorgesehener Mikrocontroller 25, Ausgabeeinheiten 26 des Mikrocontrollers 25 und eine Steuereinheit 27 (oder Steuerschaltung) zur Ansteuerung der Antriebsaktuatoren 16, 17 mit elektrischer Energie bzw. Spannung versorgt werden. Der Mikrocontroller 25 weist ein erstes Interface 28 zur Messung des durch die Antriebsaktuatoren 16, 17 fließenden Stroms und ein zweites Interface 29 zur Drehzahl/Drehrichtungsermittlung der Antriebsaktuatoren 16, 17 auf, wobei das erste Interface 28 mit der Steuereinheit 27 verbunden ist, und das zweite Interface 29 mit Sensoren 30, insbesondere Hall-Sensoren, zur Ermittlung der Drehzahl/Drehrichtung der Antriebsaktuatoren 16, 17 verbunden ist. Aus entsprechenden Strommesswerten und Messwerten der Sensoren 30 kann der Mikrocontroller 25 den durch die Antriebsaktuatoren 16, 17 fließenden Strom bzw. das Drehmoment/die Drehrichtung der Antriebsaktuatoren 16, 17 ermitteln. Entsprechende (Mess-)Werte können zur Steuerung oder Regelung der Antriebsaktuatoren 16, 17 basierend auf einem durch einen Benutzer kommandierten Verstellsignal oder anderweitig verwendet werden. Die Datenkommunikation zwischen der Steuerung 19 und den Antriebsaktuatoren 16, 17 sowie die Ansteuerung der Antriebsaktuatoren 16, 17 erfolgt über eine zweite Schnittstelleneinheit 31 der Steuerung 19.

Im Betrieb der Steuerung 19 empfängt der Mikrokontroller 26 über die dritte Schnittstelle 23 Stellsignale bzw. Verstellsignale zur Positionsveränderung der KFZ-Lenksäule 1 und ermittelt Ansteuersignale zur Ansteuerung der Steuereinheit 19 zum Betrieb der Antriebsaktuatoren 16, 17 zur Positionsverstellung der KFZ-Lenksäule 1 durch die Antriebsaktuatoren 16, 17.

Wie nachfolgend noch genauer erläutert wird, erzeugt der Mikrokontroller 25 PWM-Signale, welche über die Ausgabeeinheit 26 an die Steuereinheit 27 zu deren Steuerung übermittelt werden.

Fig. 4 zeigt eine Verschaltung der Steuereinheit 27 mit den beiden Antriebsaktuatoren 16, 17 zur Durchführung eines hierin vorgeschlagenen Verfahrens.

Die Steuereinheit 27 weist eine erste Halbbrücke HB1, eine zweite Halbbrücke HB2 und eine dritte Halbbrücke HB3 auf. Jede der Halbbrücken HB1 bis HB3 weist zwei in Reihe geschaltete Schaltelemente auf. Konkret weist die erste Halbbrücke HB1 die beiden Schaltelemente S1 und S2, die zweite Halbbrücke HB2 die beiden Schaltelemente S3 und S4, und die dritte Halbbrücke HB3 die beiden Schaltelemente S5 und S6 auf. Bei den Schaltelementen S1 bis S6 kann es sich wie in Fig. 4 angedeutet, um MOSFETs handeln, die für einen durch die Antriebsaktuatoren 16, 17 im Betrieb fließenden Strom ausgelegt sind (Schaltelemente der Leistungselektronik).

Die Halbbrücken HB1 bis HB3 sind zwischen einem ersten elektrischen Gleichstrompotential, in Fig. 4 mit Vcc bezeichnet, und einem zweiten elektrischen Gleichstrompotential, in Fig. 4 mit GND (Masse) bezeichnet, parallelgeschaltet.

Das zweite elektrische Gleichstrompotential GND ist niedriger als das erste elektrische Gleichstrompotential Vcc, wobei, wie weiter oben angemerkt, Vcc auch als Highside und GND als Lowside bezeichnet werden können.

Mithin umfasst die Steuereinheit 27 eine Parallelschaltung dreier Halbbrücken HB1 bis HB3 zwischen der Highside und der Lowside, wobei die Schaltelemente S1, S3 und S5 als Highside-Schaltelemente und die Schaltelemente S2, S4 und S6 als Lowside-Schaltelemente bezeichnet werden können.

Zwischen den beiden Schaltelementen S1 und S2 der ersten Halbbrücke HB1 ist ein erster Knotenpunkt K1 ausgebildet. Analog sind zwischen den beiden Schaltelementen S3 und S4 der zweiten Halbbrücke HB2 und den beiden Schaltelementen S5 und S6 der dritten Halbbrücke HB3 ein zweiter Knotenpunkt K2 und ein dritter Knotenpunkt K3 ausgebildet. Die Knotenpunkte K1 bis K3 bilden, wie sich aus nachfolgender Beschreibung ergibt, elektrische Anschlüsse oder Anschlusspunkte zur Verbindung mit elektrischen Anschlüssen der Antriebsaktuatoren 16, 17 und zu deren Versorgung mit (Betriebs-)Energie.

Jeder Antriebsaktuator 16, 17 weist einen ersten und einen zweiten elektrischen Anschluss auf, wobei in Fig. 4 der erste Antriebsaktuator 16 den ersten Anschluss 16.1 und den zweiten Anschluss 16.2 und der zweite Antriebsaktuator 17 den ersten Anschluss 17.1 und den zweiten Anschluss 17.2 aufweisen.

Die Anschlüsse der Antriebsaktuatoren 16, 17 und die Knotenpunkte K1 bis K3 sind wie folgt elektrisch verbunden:
Der erste Anschluss 16.1 des ersten Antriebsaktuators 16 ist mit dem ersten Knotenpunkt K1 der ersten Halbbrücke HB1 verbunden. Der zweite Anschluss 17.2 des zweiten Antriebsaktuators 17 ist mit dem zweiten Knotenpunkt K2 der zweiten Halbbrücke HB2 verbunden. Sowohl der zweite Anschluss 16.2 des ersten Antriebsaktuators 16 als auch der erste Anschluss 17.1 des zweiten Antriebsaktuators ist mit dem dritten Knotenpunkt K3 der dritten Halbbrücke HB3 verbunden.

Gemäß dem hierin vorgeschlagenen Verfahren wird die Steuereinheit 27 in einem Betriebsmodus betrieben, in welchem der erste und zweite Antriebsaktuator 16, 17 gemeinsam betrieben werden. Dabei erfolgt die Ansteuerung der Antriebsaktuatoren 16, 17 durch die Halbbrücken HB1 bis HB3 derart, dass alle drei Halbbrücken getaktet betrieben werden. Konkret werden die Schaltelemente S1 bis S6 der ersten bis dritten Halbbrücke HB1, HB2, HB3 jeweils durch Pulsweitenmodulationssignale PWMS mit jeweils zugeordneter Periodendauer und zugeordnetem Tastgrad angesteuert und in einem taktenden Betrieb betrieben. Die Pulsweitenmodulationssignale PWMS werden durch den Mikrocontroller 25 basierend auf Signalen eines benutzerbetätigten Aktuators, z.B. eines Schalters oder eines Hebels zur Positionsverstellung der KFZ-Lenksäule 1, generiert, wobei die Signale dem Mikrocontroller 25 über die zweite Schnittstelle 22 bereitgestellt werden. Ein entsprechendes Signal kann beispielsweise eine Verstellung der KFZ-Lenksäule in X-Richtung (L) und Z-Richtung (H) kommandieren.

Die zu kommandierende Drehrichtung für der Antriebsaktuatoren 16 und 17 hängt insbesondere von der kommandierten Positionsverstellung ab, wie z.B. KFZ-Lenksäule ausfahren/einziehen und höherstellen/tieferstellen. In diesem Zusammenhang und abhängig von der durch die Signale kommandierten Positionsverstellung kann es beispielsweise erforderlich sein, dass beide Antriebsaktuatoren 16 und 17 mit gleichem Drehsinn oder entgegengesetztem Drehsinn betrieben werden. Insgesamt ergeben sich also vier Szenarien. Bezeichnet man die unterschiedlichen Drehsinne der Einfachheit halber mit "rechtsdrehend" (im Uhrzeigersinn) und "linksdrehend" (gegen den Uhrzeigersinn), so sind diese vier Szenarien gegeben durch: beide Antriebsaktuatoren 16, 17 "rechtsdrehend", beide Antriebsaktuatoren 16, 17 "linksdrehend", Antriebsaktuator 16 "rechtsdrehend" und Antriebsaktuator 17 "linksdrehend" und Antriebsaktuator 16 "linksdrehend" und Antriebsaktuator 17 "rechtsdrehend". Alle vier Fälle sind mit dem vorgeschlagenen Verfahren durch entsprechende PWM-Signale umsetzbar.

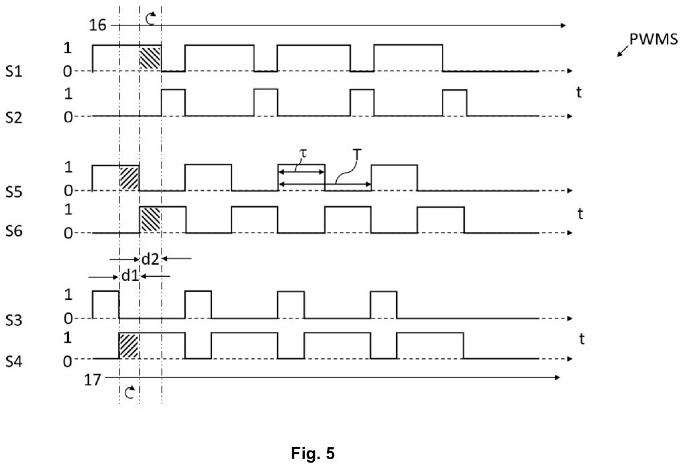

Fig. 5 zeigt schematisch einen zeitverlauf von PWM-Signalen PWMS der ersten bis sechsten Schaltelemente S1 bis S6 der drei Halbbrücken HB1 bis HB3. In Fig. 5 bezeichnen die waagrechten, gestrichelten Pfeile die Zeitachse t, "0" und "1" den Schaltzustand der Schaltelemente (0=nicht durchgeschalten, 1=durchgeschalten), S1 bis S6 die Schaltelemente zugeordnet zu den jeweiligen PWM-Signalen (in der Zeitrichtung durchgezogene Rechteckkurven). Der Betrieb der Antriebsaktuatoren 16 und 17 ist durch durchgezogene waagrechte Pfeile (oberhalb und unterhalb der PWM-Signale PWMS) angedeutet, wobei die sich aus den PWM-Signalen PWMS ergebende Drehrichtungen durch gekrümmte Pfeile gekennzeichnet sind. Zwei Zeitintervalle sind mit d1 und d2 bezeichnet. In Fig. 5 bezeichnet T die Periodendauer und τ die Impulsdauer, schematisch dargestellt für die dritte Halbbrücke am Schaltelement S5. Der Tastgrad D ergibt sich aus dem Quotienten τ/T.

In dem Beispiel der Fig. 5 ist sind im Zeitbereich vor dem Zeitintervall d1 die Schaltelemente S1, S3 und S3 durchgeschalten ("1"), die Schaltelemente S2, S4 und S6 nicht durchgeschalten ("0"). Basierend auf dem Anschluss der Antriebsaktuatoren nach Fig. 4 resultiert keine Drehung der Antriebsaktuatoren 16, 17 in diesem Zeitbereich, da alle Anschlüsse der Antriebsaktuatoren 16, 17 auf dem Potential Vcc liegen.

Im Zeitintervall d1 sind insbesondere die Schaltelemente S1 und S5 weiterhin durchgeschalten ("1"), wobei die beiden Anschlüsse 16.1 und 16.2 des ersten Antriebsaktuators 16 weiterhin auf dem Potential Vcc liegen, so dass keine Drehung des ersten Antriebsaktuators 16 resultiert.

Demgegenüber sind für den zweiten Antriebsaktuator 17 im Zeitintervall d1 die Schaltelemente S5 und S4 durchgeschalten ("1"), wobei der erste Anschluss 17.1 des zweiten Antriebsaktuators 17 auf dem Potential Vcc liegt, und der zweite Anschluss 17.2 des zweiten Antriebsaktuators 17 auf dem Potential GND liegt. Entsprechend ergibt sich ein Stromfluss vom ersten Anschluss 17.1 ("+" in Fig. 4) zum zweiten Anschluss 17.2 ("-" in Fig. 4), was zu einer Drehung im Uhrzeigersinn (von + nach - in Fig. 4) führt.

Im Zeitintervall d2 sind das Schaltelement S6 und S4 durchgeschalten ("1"), so dass beide Anschlüsse 17.1 und 17.2 des zweiten Antriebsaktuators 17 auf dem Potential GND liegen, so dass keine Drehung des zweiten Antriebsaktuators 17 resultiert.

Demgegenüber sind für den ersten Antriebsaktuator 16 im Zeitintervall d2 die Schaltelemente S1 und S6 durchgeschalten ("1"), wobei der erste Anschluss 16.1 des ersten Antriebsaktuators 16 auf dem Potential Vcc liegt, und der zweite Anschluss 16.2 des ersten Antriebsaktuators 16 auf dem Potential GND liegt. Entsprechend ergibt sich ein Stromfluss vom ersten Anschluss 16.1 ("+" in Fig. 4) zum zweiten Anschluss 16.2 ("-" in Fig. 4), was zu einer Drehung im Uhrzeigersinn (von + nach - in Fig. 4) führt.

Das bedeutet im konkreten Fall, dass beide Antriebsaktuatoren in gleicher Richtung (in der Darstellung der Figuren im Uhrzeigersinn bzw. rechtsdrehend) drehen. Dabei wird die erste Halbbrücke mit einer Pulsweitenmodulation von 75%, die zweite Halbbrücke HB2 mit einer Pulsweitenmodulation von 50% und die dritte Halbbrücke HB3 mit einer Pulsweitenmodulation von 25% (jeweils bezogen auf das Highside-Schaltelement) betrieben. Der Strom durch die Antriebsaktuatoren 16, 17 ergibt sich aus der Differenz der Pulsweitenmodulationen, konkret für den ersten Antriebsaktuator 16: 25%=75%-50%, und für den zweiten Antriebsaktuator 17: 25%=50%-25%.

Durch andere Pulsweitenmodulationen können andere Konstellationen betreffend Drehrichtung und Strom erreicht werden. Wird beispielsweise die zweite Halbbrücke HB2 mit 20% PMW betrieben, ergibt sich für den Strom 30% usw. Ferner, wird beispielsweise die erste Halbbrücke mit 25% PWM betrieben (bei 50% PWM der dritten Halbbrücke HB3), so ergibt sich eine Drehrichtung gegen den Uhrzeigersinn (linksdrehend) in einem Zeitintervall, in welchem die Schaltelemente S6 und S2 durchgeschalten sind. Wird die zweite Halbbrücke HB2 z.B. mit 75% PWM betrieben (bei 50% PWM der dritten Halbbrücke HB3), so ergibt sich eine Drehrichtung gegen den Uhrzeigersinn in einem Zeitintervall, in welchem die Schaltelemente S3 und S6 durchgeschalten sind.

Daraus ergibt sich, dass durch geeignete PWM-Ansteuerung der Halbbrücken HB1 bis HB3 für die beiden Antriebsaktuatoren 16 und 17 im Wesentlichen beliebige Kombinationen aus Drehrichtung und Strom (Drehgeschwindigkeit, Drehmoment) umgesetzt werden können. Dabei ist anzumerken, dass der Strom durch die Differenz der PWM gegeben ist.

### Bezugszeichen

- 1: KFZ-Lenksäule
- 2: Trageinheit
- 3: Befestigungsmittel
- 4: Verstelleinheit
- 5: Mantelrohr
- 6: Lenkspindel
- 7: Befestigungsabschnitt
- 8: Manteleinheit
- 9: Schwenklager
- 10: Stellhebel
- 11: erster Verstellantrieb
- 12: zweiter Verstellantrieb
- 13: Gewindespindel
- 14: Spindelmutter
- 15: Übertragungseinheit
- 16: erster Antriebsaktuator
- 17: zweiter Antriebsaktuator
- 16.1, 17.1: erster Anschluss
- 16.2, 17.2: zweiter Anschluss
- 18: Rotationsspindelmechanismus
- 19: Steuerung
- 20: erste Schnittstelleneinheit
- 21: erste Schnittstelle
- 22: zweite Schnittstelle
- 23: dritte Schnittstelle
- 24: EMI-Filter
- 25: Mikrocontroller
- 26: Ausgabeeinheit
- 27: Steuereinheit
- 28: erstes Interface
- 29: zweites Interface
- 30: Sensor
- 31: zweite Schnittstelleneinheit
- D1, d2: Zeitintervall
- E: hinteres Ende
- G: Gewindespindelachse
- GRD: zweites elektrisches Gleichstrompotential
- H: Höhenrichtung
- HB1..HB3: erste bis dritte Halbbrücke
- K1..K3: Knotenpunkt
- L: Längsachse
- PWMS: Pulsweitenmodulationssignale
- S: horizontale Schwenkachse
- S1..S6: Schaltelement
- t: Zeit
- VCC: erstes elektrisches Gleichstrompotential

## Patentansprüche

1. Verfahren zur Positionsverstellung einer in zwei Richtungen (L, H) verstellbaren Lenksäule (1) für ein Lenksystem eines Kraftfahrzeugs mittels eines ersten Antriebsaktuators (16) und eines zweiten Antriebsaktuators (17) durch eine Steuereinheit (27),
wobei die Steuereinheit (27) eine erste Halbbrücke (HB1), eine zweite Halbbrücke (HB2) und eine dritte Halbbrücke (HB3) mit jeweils zwei in Reihe geschalteten Schaltelementen (S1, S2; S3, S4; S5, S6) umfasst,
wobei die Halbbrücken (HB1, HB2, HB3) zwischen einem ersten elektrischen Gleichstrompotential (Vcc) und einem zweiten elektrischen Gleichstrompotential (GND), das niedriger ist als das erste elektrische Gleichstrompotential (Vcc), parallel geschaltet sind, und
zwischen den beiden Schaltelementen (S1, S2; S3, S4; S5, S6) der ersten Halbbrücke (HB1), der zweiten Halbbrücke (HB2) und der dritten Halbbrücke (HB3), respektive, ein erster Knotenpunkt (K1), ein zweiter Knotenpunkt (K2) und ein dritter Knotenpunkt (K3) gebildet sind, und
jeder Antriebsaktuator (16, 17) einen ersten elektrischen Anschluss (16.1, 17.1) und einen zweiten elektrischen Anschluss (16.2, 17.2) aufweist,
wobei der erste Anschluss (16.1) des ersten Antriebsaktuators (16) mit dem ersten Knotenpunkt (K1), der zweite Anschluss (17.2) des zweiten Antriebsaktuators (17) mit dem zweiten Knotenpunkt (K2), und der zweite Anschluss (16.1) des ersten Antriebsaktuators (16) und der erste Anschluss (17.1) des zweiten Antriebsaktuators (17) jeweils mit dem dritten Knotenpunkt (K3) elektrisch verbunden sind,
**dadurch gekennzeichnet, dass**
das Verfahren einen Betriebsmodus der Steuereinheit (27) umfasst, in welchem der erste Antriebsaktuator (16) und der zweite Antriebsaktuator (17) mittels der ersten bis dritten Halbbrücke (HB1, HB2, HB3) gemeinsam dadurch angesteuert werden, dass die Schaltelemente (S1, S2; S3, S4; S5, S6) sowohl der ersten Halbbrücke (HB1) und der zweiten Halbbrücke (HB2) als auch der dritten Halbbrücke (HB3) jeweils durch Pulsweitenmodulationssignale (PWMS) mit jeweils zugeordneter Periodendauer (T) und zugeordnetem Tastgrad (D) angesteuert und in einem taktenden Betrieb betrieben werden.

2. Verfahren nach Anspruch 1, wobei die Periodendauern (T) der Pulsweitenmodulationssignale (PWMS) gleich sind, und die Tastgrade (D) der Pulsweitenmodulationssignale (PWMS) jeweils zwischen 0 und 100% liegen.

3. Verfahren nach einem der Ansprüche 1 und 2, wobei der Tastgrad (D) für den taktenden Betrieb der dritten Halbbrücke (HB3) 50% beträgt.

4. Verfahren nach einem der vorangehenden Ansprüche, wobei die Tastgrade (D) der Pulsweitenmodulationssignale (PWMS) zum taktenden Betrieb der ersten Halbbrücke (HB1) und der zweiten Halbbrücke (HB2) verschieden sind vom Tastgrad (D) des Pulsweitenmodulationssignals (PWMS) zum taktenden Betrieb der dritten Halbbrücke (HB3).

5. Verfahren nach einem der vorangehenden Ansprüche, wobei eine Drehrichtung der Antriebsaktuatoren (16, 17) und/oder ein durch die Antriebsaktuatoren (16, 17) fließender Strom für den Betriebsmodus durch die Tastgrade (D) der Pulsweitenmodulationssignale (PWMS) zum taktenden Betrieb der ersten Halbbrücke (HB1) und der zweiten Halbbrücke (HB2) eingestellt wird/werden.

6. Verfahren nach Anspruch 5, wobei die Drehrichtung der Antriebsaktuatoren (16, 17) und/oder der durch die Antriebsaktuatoren (16, 17) fließende Strom für den Betriebsmodus durch die Tastgrade (D) der Pulsweitenmodulationssignale (PWMS) zum taktenden Betrieb der ersten Halbbrücke (HB1) und der zweiten Halbbrücke (HB2) durch eine jeweilige Differenz der Tastgrade (D) der Pulsweitenmodulationssignale (PWMS) zum taktenden Betrieb der ersten Halbbrücke (HB1) und der zweiten Halbbrücke (HB2) und des Tastgrads (D) des Pulsweitenmodulationssignals (PWMS) der dritten Halbbrücke (HB3) eingestellt wird/werden.

7. Verfahren nach einem der vorangehenden Ansprüche, wobei die beiden Schaltelemente (S1, S2; S3, S4; S5, S6) einer jeden Halbbrücke (HB1; HB2; HB3) jeweils mit komplementären Tastgraden (D) getaktet werden.

8. Verfahren nach einem der vorangehenden Ansprüche, wobei als Schaltelemente (S1, S2; S3, S4; S5, S6) Halbleiterschaltelemente, insbesondere Schalttransistoren, vorzugsweise MOSFETs, verwendet werden.

9. Verfahren nach einem der vorangehenden Ansprüche, wobei als Antriebsaktuatoren (16, 17) bürstenbehaftete Gleichstromaktuatoren verwendet werden, insbesondere bürstenbehaftete Gleichstrommotoren.

10. Verfahren nach einem der vorangehenden Ansprüche umfassend einen weiteren Betriebsmodus, in welchem lediglich die Schaltelemente (S1, S2; S3, S4) der ersten Halbbrücke (HB1) und der zweiten Halbbrücke (HB2) durch Pulsweitenmodulationssignale (PWMS) mit jeweils zugeordneter Periodendauer (T) und zugeordnetem Tastgrad (D) angesteuert und in einem taktenden Betrieb betrieben werden.

11. Kraftfahrzeug-Lenksäule (1) für ein Lenksystem eines Kraftfahrzeugs mit einer Steuereinheit (27) und einer Positionsverstelleinrichtung (4) zur Positionsverstellung der Kraftfahrzeug-Lenksäule (1), wobei die Positionsverstelleinrichtung (4) zwei Antriebsaktuatoren (16, 17) aufweist, und die Steuereinheit (27) eine erste Halbbrücke (HB1), eine zweite Halbbrücke (HB2) und eine dritte Halbbrücke (HB3) mit jeweils zwei in Reihe geschalteten Schaltelementen (S1, S2; S3, S4; S5, S6) umfasst, wobei die Halbbrücken (HB1, HB2, HB3) im Betrieb zwischen einem ersten elektrischen Gleichstrompotential (Vcc) und einem zweiten elektrischen Gleichstrompotential (GND), das niedriger ist als das erste elektrische Gleichstrompotential (Vcc), parallel geschaltet sind, und zwischen den beiden Schaltelementen (S1, S2; S3, S4; S5, S6) der ersten Halbbrücke (HB1), der zweiten Halbbrücke (HB2) und der dritten Halbbrücke (HB3), respektive, ein erster Knotenpunkt (K1), ein zweiter Knotenpunkt (K2) und ein dritter Knotenpunkt (K3) gebildet ist, und jeder Antriebsaktuator (16, 17) einen ersten elektrischen Anschluss (16.1, 17.1) und einen zweiten elektrischen Anschluss (16.2, 17.2) aufweist, wobei der erste Anschluss (16.1) des ersten Antriebsaktuators (16) mit dem ersten Knotenpunkt (K1), der zweite Anschluss (17.2) des zweiten Antriebsaktuators (17) mit dem zweiten Knotenpunkt (K2), und der zweite Anschluss (16.2) des ersten Antriebsaktuators (16) und der erste Anschluss (17.1) des zweiten Aktuators (17) jeweils mit dem dritten Knotenpunkt (K3) verbunden sind, und wobei der Steuereinheit (27) ein Steuerungselement zugeordnet ist, das eingerichtet ist zur Durchführung eines Verfahrens nach einem der Ansprüche 1 bis 10.

12. Kraftfahrzeug-Lenksäule (1) nach Anspruch 11, wobei das Steuerungselement, insbesondere eine digitale Logik, ein Prozessor, ein Mikrocontroller (25) und/oder ein Mikrocomputer, durch Programmierung oder durch in einem zugeordneten Speicher gespeicherte und durch das Steuerungselement ausführbare Computerprogramm-Anweisungen zur Durchführung des Verfahrens eingerichtet ist.

13. Kraftfahrzeug mit einem Lenksystem aufweisend eine Kraftfahrzeug-Lenksäule (1) nach Anspruch 11 oder Anspruch 12.

## Claims

1. A method for position adjustment of a steering column (1) adjustable in two directions (L, H) for a steering system of a motor vehicle, by means of a first drive actuator (16) and a second drive actuator (17) under control of a control unit (27), wherein the control unit (27) comprises a first half-bridge (HB1), a second half-bridge (HB2) and a third half-bridge (HB3), each comprising two series-connected switching elements (S1, S2; S3, S4; S5, S6),
wherein the half-bridges (HB1, HB2, HB3) are connected in parallel between a first electrical DC potential (Vcc) and a second electrical DC potential (GND), which is lower than the first electrical DC potential (Vcc), and
wherein a first node (K1), a second node (K2) and a third node (K3) are formed, respectively, between the two switching elements (S1, S2; S3, S4; S5, S6) of the first half-bridge (HB1), the second half-bridge (HB2) and the third half-bridge (HB3), and
each drive actuator (16, 17) has a first electrical terminal (16.1, 17.1) and a second electrical terminal (16.2, 17.2),
wherein the first terminal (16.1) of the first drive actuator (16) is electrically connected to the first node (K1), the second terminal (17.2) of the second drive actuator (17) is electrically connected to the second node (K2), and the second terminal (16.1) of the first drive actuator (16) and the first terminal (17.1) of the second drive actuator (17) are each electrically connected to the third node (K3), **characterized in that**
the method comprises an operating mode of the control unit (27), in which the first drive actuator (16) and the second drive actuator (17) are jointly controlled by means of the first to third half-bridges (HB1, HB2, HB3) **in that** the switching elements (S1, S2; S3, S4; S5, S6) of each of the first half-bridge (HB1), the second half-bridge (HB2) and the third half-bridge (HB3) are controlled by respective pulse-width modulation signals (PWMS), each having an assigned period duration (T) and an assigned duty cycle (D), and are operated in a clocked mode.

2. The method according to claim 1, wherein the period durations (T) of the pulse-width modulation signals (PWMS) are equal, and the duty cycles (D) of the pulse-width modulation signals (PWMS) are each between 0 and 100%.

3. The method according to either claim 1 or claim 2, wherein the duty cycle (D) for the clocked mode of the third half-bridge (HB3) is 50%.

4. The method according to any one of the preceding claims, wherein the duty cycles (D) of the pulse-width modulation signals (PWMS) for the clocked mode of the first half-bridge (HB1) and the second half-bridge (HB2) differ from the duty cycle (D) of the pulse-width modulation signal (PWMS) for the clocked mode of the third half-bridge (HB3).

5. The method according to any one of the preceding claims, wherein, for the operating mode, a direction of rotation of the drive actuators (16, 17) and/or a current flowing through the drive actuators (16, 17) is set by the duty cycles (D) of the pulse-width modulation signals (PWMS) for the clocked mode of the first half-bridge (HB1) and the second half-bridge (HB2).

6. The method according to claim 5, wherein, for the operating mode, the direction of rotation of the drive actuators (16, 17) and/or the current flowing through the drive actuators (16, 17) is set by the duty cycles (D) of the pulse-width modulation signals (PWMS) for the clocked mode of the first half-bridge (HB1) and the second half-bridge (HB2), based on a respective difference between the duty cycle (D) of the pulse-width modulation signal (PWMS) for each of the first half-bridge (HB1) and the second half-bridge (HB2) and the duty cycle (D) of the pulse-width modulation signal (PWMS) of the third half-bridge (HB3).

7. The method according to any one of the preceding claims, wherein the two switching elements (S1, S2; S3, S4; S5, S6) of each half-bridge (HB1; HB2; HB3) are clocked with complementary duty cycles (D).

8. The method according to any one of the preceding claims, wherein semiconductor switching elements, in particular switching transistors, preferably MOSFETs, are used as the switching elements (S1, S2; S3, S4; S5, S6).

9. The method according to any one of the preceding claims, wherein brushed DC actuators, in particular brushed DC motors, are used as the drive actuators (16, 17).

10. The method according to any one of the preceding claims, comprising a further operating mode in which only the switching elements (S1, S2; S3, S4) of the first half-bridge (HB1) and the second half-bridge (HB2) are controlled by pulse-width modulation signals (PWMS) each having an assigned period duration (T) and an assigned duty cycle (D), and are operated in a clocked mode.

11. A motor vehicle steering column (1) for a steering system of a motor vehicle, comprising a control unit (27) and a position adjustment device (4) for position adjustment of the motor vehicle steering column (1), wherein the position adjustment device (4) has two drive actuators (16, 17), and the control unit (27) comprises a first half-bridge (HB1), a second half-bridge (HB2) and a third half-bridge (HB3), each comprising two series-connected switching elements (S1, S2; S3, S4; S5, S6), wherein, during operation, the half-bridges (HB1, HB2, HB3) are connected in parallel between a first electrical DC potential (Vcc) and a second electrical DC potential (GND), which is lower than the first electrical DC potential (Vcc), and a first node (K1), a second node (K2) and a third node (K3) are formed, respectively, between the two switching elements (S1, S2; S3, S4; S5, S6) of the first half-bridge (HB1), the second half-bridge (HB2) and the third half-bridge (HB3), and each drive actuator (16, 17) has a first electrical terminal (16.1, 17.1) and a second electrical terminal (16.2, 17.2), wherein the first terminal (16.1) of the first drive actuator (16) is connected to the first node (K1), the second terminal (17.2) of the second drive actuator (17) is connected to the second node (K2), and the second terminal (16.2) of the first drive actuator (16) and the first terminal (17.1) of the second actuator (17) are each connected to the third node (K3), and wherein a control element is associated with the control unit (27) and is configured to perform a method according to any one of claims 1 to 10.

12. The motor vehicle steering column (1) according to claim 11, wherein the control element, in particular digital logic circuitry, a processor, a microcontroller (25) and/or a microcomputer, is configured, by programming or by computer program instructions stored in an associated memory and executable by the control element, to perform the method.

13. A motor vehicle having a steering system comprising a motor vehicle steering column (1) according to claim 11 or claim 12.

## Revendications

1. Procédé de réglage de position d'une colonne de direction (1) réglable dans deux directions (L, H), destinée à un système de direction d'un véhicule automobile, au moyen d'un premier actionneur d'entraînement (16) et d'un deuxième actionneur d'entraînement (17), par une unité de commande (27),
dans lequel l'unité de commande (27) comprend un premier demi-pont (HB1), un deuxième demi-pont (HB2) et un troisième demi-pont (HB3), comprenant chacun deux éléments de commutation (S1, S2 ; S3, S4 ; S5, S6) montés en série,
dans lequel les demi-ponts (HB1, HB2, HB3) sont montés en parallèle entre un premier potentiel électrique continu (Vcc) et un deuxième potentiel électrique continu (GND), qui est inférieur au premier potentiel électrique continu (Vcc), et dans lequel, entre les deux éléments de commutation (S1, S2 ; S3, S4 ; S5, S6) du premier demi-pont (HB1), du deuxième demi-pont (HB2) et du troisième demi-pont (HB3), sont formés, respectivement, un premier nœud (K1), un deuxième nœud (K2) et un troisième nœud (K3), et
dans lequel chaque actionneur d'entraînement (16, 17) comporte une première borne électrique (16.1, 17.1) et une deuxième borne électrique (16.2, 17.2),
dans lequel la première borne (16.1) du premier actionneur d'entraînement (16) est reliée électriquement au premier nœud (K1), la deuxième borne (17.2) du deuxième actionneur d'entraînement (17) est reliée électriquement au deuxième nœud (K2), et la deuxième borne (16.1) du premier actionneur d'entraînement (16) et la première borne (17.1) du deuxième actionneur d'entraînement (17) sont chacune reliées électriquement au troisième nœud (K3),
**caractérisé en ce que**
le procédé comprend un mode de fonctionnement de l'unité de commande (27), dans lequel le premier actionneur d'entraînement (16) et le deuxième actionneur d'entraînement (17) sont commandés conjointement au moyen des premier à troisième demi-ponts (HB1, HB2, HB3), les éléments de commutation (S1, S2; S3, S4; S5, S6) tant du premier demi-pont (HB1) et du deuxième demi-pont (HB2) que du troisième demi-pont (HB3) étant chacun commandés par des signaux de modulation de largeur d'impulsion (PWMS) ayant chacun une durée de période associée (T) et un rapport cyclique associé (D), et étant exploités en fonctionnement cadencé.

2. Procédé selon la revendication 1, dans lequel les durées de période (T) des signaux de modulation de largeur d'impulsion (PWMS) sont identiques et les rapports cycliques (D) des signaux de modulation de largeur d'impulsion (PWMS) sont chacun compris entre 0 et 100 %.

3. Procédé selon l'une quelconque des revendications 1 et 2, dans lequel le rapport cyclique (D) pour le fonctionnement cadencé du troisième demi-pont (HB3) est de 50 %.

4. Procédé selon l'une quelconque des revendications précédentes, dans lequel les rapports cycliques (D) des signaux de modulation de largeur d'impulsion (PWMS) pour le fonctionnement cadencé du premier demi-pont (HB1) et du deuxième demi-pont (HB2) sont différents du rapport cyclique (D) du signal de modulation de largeur d'impulsion (PWMS) pour le fonctionnement cadencé du troisième demi-pont (HB3).

5. Procédé selon l'une quelconque des revendications précédentes, dans lequel un sens de rotation des actionneurs d'entraînement (16, 17) et/ou un courant circulant à travers les actionneurs d'entraînement (16, 17) sont réglés, pour le mode de fonctionnement, par les rapports cycliques (D) des signaux de modulation de largeur d'impulsion (PWMS) pour le fonctionnement cadencé du premier demi-pont (HB1) et du deuxième demi-pont (HB2).

6. Procédé selon la revendication 5, dans lequel le sens de rotation des actionneurs d'entraînement (16, 17) et/ou le courant circulant à travers les actionneurs d'entraînement (16, 17) sont réglés, pour le mode de fonctionnement, par les rapports cycliques (D) des signaux de modulation de largeur d'impulsion (PWMS) pour le fonctionnement cadencé du premier demi-pont (HB1) et du deuxième demi-pont (HB2), au moyen d'une différence respective entre les rapports cycliques (D) des signaux de modulation de largeur d'impulsion (PWMS) pour le fonctionnement cadencé du premier demi-pont (HB1) et du deuxième demi-pont (HB2) et le rapport cyclique (D) du signal de modulation de largeur d'impulsion (PWMS) du troisième demi-pont (HB3).

7. Procédé selon l'une quelconque des revendications précédentes, dans lequel les deux éléments de commutation (S1, S2 ; S3, S4 ; S5, S6) de chacun des demi-ponts (HB1 ; HB2 ; HB3) sont cadencés avec des rapports cycliques (D) complémentaires.

8. Procédé selon l'une quelconque des revendications précédentes, dans lequel des éléments de commutation à semi-conducteur, en particulier des transistors de commutation, de préférence des MOSFET, sont utilisés en tant qu'éléments de commutation (S1, S2 ; S3, S4 ; S5, S6).

9. Procédé selon l'une quelconque des revendications précédentes, dans lequel des actionneurs à courant continu à balais, en particulier des moteurs à courant continu à balais, sont utilisés en tant qu'actionneurs d'entraînement (16, 17).

10. Procédé selon l'une quelconque des revendications précédentes, comprenant un mode de fonctionnement supplémentaire dans lequel seuls les éléments de commutation (S1, S2 ; S3, S4) du premier demi-pont (HB1) et du deuxième demi-pont (HB2) sont commandés par des signaux de modulation de largeur d'impulsion (PWMS) ayant chacun une durée de période associée (T) et un rapport cyclique associé (D), et sont exploités en fonctionnement cadencé.

11. Colonne de direction (1) de véhicule automobile destinée à un système de direction d'un véhicule automobile, comprenant une unité de commande (27) et un dispositif de réglage de position (4) destiné à régler la position de la colonne de direction (1) de véhicule automobile, dans laquelle le dispositif de réglage de position (4) comporte deux actionneurs d'entraînement (16, 17), et l'unité de commande (27) comprend un premier demi-pont (HB1), un deuxième demi-pont (HB2) et un troisième demi-pont (HB3), comprenant chacun deux éléments de commutation (S1, S2 ; S3, S4 ; S5, S6) montés en série, dans laquelle les demi-ponts (HB1, HB2, HB3), en fonctionnement, sont montés en parallèle entre un premier potentiel électrique continu (Vcc) et un deuxième potentiel électrique continu (GND), qui est inférieur au premier potentiel électrique continu (Vcc), et dans laquelle, entre les deux éléments de commutation (S1, S2 ; S3, S4 ; S5, S6) du premier demi-pont (HB1), du deuxième demi-pont (HB2) et du troisième demi-pont (HB3), sont formés, respectivement, un premier nœud (K1), un deuxième nœud (K2) et un troisième nœud (K3), et chaque actionneur d'entraînement (16, 17) comporte une première borne électrique (16.1, 17.1) et une deuxième borne électrique (16.2, 17.2), la première borne (16.1) du premier actionneur d'entraînement (16) étant reliée au premier nœud (K1), la deuxième borne (17.2) du deuxième actionneur d'entraînement (17) étant reliée au deuxième nœud (K2), et la deuxième borne (16.2) du premier actionneur d'entraînement (16) et la première borne (17.1) du deuxième actionneur (17) étant chacune reliées au troisième nœud (K3), et dans laquelle un élément de commande configuré pour mettre en œuvre un procédé selon l'une quelconque des revendications 1 à 10 est associé à l'unité de commande (27).

12. Colonne de direction (1) de véhicule automobile selon la revendication 11, dans laquelle l'élément de commande, en particulier une logique numérique, un processeur, un microcontrôleur (25) et/ou un micro-ordinateur, est configuré, par programmation ou par des instructions de programme informatique stockées dans une mémoire associée et exécutables par l'élément de commande, pour mettre en œuvre le procédé.

13. Véhicule automobile comprenant un système de direction comportant une colonne de direction (1) de véhicule automobile selon la revendication 11 ou la revendication 12.
